(19) Europäisches Patentamt
European Patent Office
Office européen des brevets

(11) Publication number : **0 576 213 A2**

(12) **EUROPEAN PATENT APPLICATION**

(21) Application number : **93304746.6**

(51) Int. Cl.$^5$ : **C08F 4/646,** C08F 10/00

(22) Date of filing : **17.06.93**

(30) Priority : **18.06.92 JP 159607/92**

(43) Date of publication of application :
**29.12.93 Bulletin 93/52**

(84) Designated Contracting States :
**BE DE FR GB IT NL**

(71) Applicant : **MITSUBISHI PETROCHEMICAL COMPANY LIMITED**
**2-5, Marunouchi 2-chome**
**Chiyoda-ku Tokyo-to (JP)**

(72) Inventor : **Hirakawa, Katsumi, c/o Mitsubishi Petrochemical**
**Co. Ltd., Yokkaichi Sogo Kenkyusho, 1, Toho-cho**
**Yokaichi-shi, Mie-ken (JP)**

(74) Representative : **Kyle, Diana**
**Elkington and Fife Prospect House 8**
**Pembroke Road**
**Sevenoaks, Kent TN13 1XR (GB)**

(54) **Process for polymerizing olefins.**

(57) A catalyst comprising a metallocene compound in the IVB group and an alumoxane compound is improved to alter an alumoxane compound with an inexpensive organoaluminum compound while polymerization activity is maintained at a high level, wherein a process for polymerizing an olefin with a catalyst comprising a metallocene compound in the IVB group and an organoaluminum compound and a magnesium halide having reducing ability and solubilized is disclosed. Polyolefins are obtainable in a low price and a high yield with the use of a conventional organoaluminum compound.

EP 0 576 213 A2

The present invention relates to a process for polymerizing olefins.

Specifically, the present invention relates to an improved process for polymerizing an olefin wherein a novel combination of catalyst components is used whereby olefin polymers are produced with a reduced amount of an organoaluminum component for the catalyst.

Hitherto, a catalyst comprising a transition metal compound of the IVB group combined with a methylalumoxane which is an oligomeric organoaluminum compound has been called a "Kamminsky type catalyst", and it is known that polymerization can be conducted by the use of this catalyst with a high activity (Japanese Patent Laid-Open Publication Nos. 19309/1983 and 35007/1985). While the process for polymerizing an olefin with the catalyst system exhibited several industrially useful characteristics such as good copolymerizability, controllability of stereoregularity by a ligand in the transition metal compound, and narrow molecular weight distribution of a resulting polymer, it was disadvantageous in that the catalyst scarcely exhibits activity without the use as a co-catalyst of a large amount of a methylalumoxane which is an expensive organoaluminum compound.

A variety of proposals have been made for the purpose of solving this problem.

For example, a method for polymerizing an olefin in the absence of an organoaluminum component by over a transition metal compound of the IVB group with a tetravalent boron compound anion whereby a cation of the metal such as a Zr cation species is generated has been proposed (J. Am. Chem. Soc., (1986), 108, 7410; ibid., (1989), 111, 2728). Another method proposes the use of a metallocene compound of the IVB group, trimethylaluminum and dimethylaluminum fluoride combined (Macromolecules, (1989), 22, 2186). Another method proposes the use of a zirconocene compound, a dialkylmagnesium compound and an organoaluminum halide combined (Japanese Patent Laid-Open Publication No. 290408/1991). Still another method proposes the use of a neutral metallocene compound, an alkyl aluminum and a Lewis acid such as tris(pentafluorophenyl)boron or magnesium chloride combined (Japanese Patent Laid-Open Publication No. 179005/1991). A further method for polymerizing an olefin comprises the use of a zirconocene compound supplied on a carrier such as $MgCl_2$ or $Al_2O_3$ that has been preliminarily treated with a trialkylaluminum combined with the compound with trialkylaluminum (Makromol. Chem. Rapid Commun., (1991), 12, 373).

While such catalyst systems may realize the reduction of activator cost by the use of an ordinary alkyl aluminum compound in place of an expensive methylalumoxane, they still have a problem in that the activity per transition metal decreases extensively. Particularly, the catalyst which has poor polymerization activity of the $\alpha$-olefin has a problem for practical use.

In consideration of the above described situation, an object of the present invention is to provide an improved process for polymerizing an olefin, wherein a polyolefin having a good quality can be prepared in the presence of an inexpensive activator by combining catalyst components in a novel mode.

## SUMMARY OF THE INVENTION

The present invention provides a process for polymerizing olefins which comprises containing an $\alpha$-olefin having 2-12 carbon atoms with a catalyst comprising the following catalyst Components (A), (B) and (C) thereby to polymerize the $\alpha$-olefin:

Component (A), which is a transition metal compound of the IVB group of the Periodic Table having at least one substituted or non-substituted cyclopentadienyl group as a ligand,

Component (B), which is an organoaluminum compound, and

Component (C), which is a magnesium halide compound in a liquid state having no reducing activity.

According to the present invention, an expensive alumoxane compound can be eliminated by improving a Kamminsky type catalyst by combining catalyst components in a novel mode, and a polyolefin having a controlled molecular weight distribution can be produced with the combination of catalyst components having high activity in the presence of a less expensive activator.

## DETAILED DESCRIPTION OF THE INVENTION

### [Catalyst]

The catalyst hereof comprises the Components (A), (B) and (C). The term "comprise" herein includes, in addition to a case which consists only of the indicated components (A, B and C), a case which contains an auxiliary component such as an electron donor compound.

<Component (A)>

The Component (A) is a transition metal compound of the IVB group having at least one cyclopentadienyl group, which may be substituted or non-substituted, as a ligand.

This compound is represented by the general formula:

$$(R^1{}_h\text{-}Cp)_j(R^2{}_i\text{-}Cp)_kMQ^1{}_mQ^2{}_n \quad [I]$$

wherein Cp represents a cyclopentadienyl group. $R^1$ and $R^2$ are substituent groups, which may be on a cyclopentadienyl group, and represent a hydrocarbyl group having 1-12 carbon atoms or a silicon group containing a hydrocarbyl group having 1-12 carbon atoms. h and i denote independently an integer of 0 to 5, whereby the cyclopentadienyl group Cp is non-substituted when h and i are 0. The cyclopentadienyl group Cp has a substituent group $R^1$ and/or $R^2$ when h and i are natural numbers. If $R^1$ and $R^2$ are present in plurality, two of them may or may not be bonded at the ω position or at their free terminus to form a ring fused with cyclopentadienyl group. Thus, $R^1{}_h$-Cp and $R^2{}_i$-Cp include a substituted or non-substituted cyclopentadienyl group, a fluorenyl group and an indenyl group.

More particularly, where the ligand $R^1{}_h$-Cp is a fluorenyl group where two pairs of $R^1$s each form aromatic six-membered rings fused with the cyclopentadienyl group Cp to which the $R^1$s are bonded, the sole site remaining unsubstituted in the cyclopentadienyl group may or may not be substituted further with a substituent $R^1$, and each of the aromatic rings fused with the cyclopentadienyl group to form the fluorenyl group, in turn, may or may not be substituted with a hydrocarbyl group of 1 to 8 carbon atoms, which may come from the remainder of $R^1$ after it has been used for forming the fused 6-membered ring, in an amount up to 4. This applies to the ligand $R^2{}_i$-Cp also.

When the ligand $R^1{}_h$-Cp is an indenyl group where one pair of $R^1$ forms an aromatic/six-membered ring fused with the cyclopentadienyl group, the 5-membered ring of the indenyl group has 3 sites remaining available for substitution can thus be substituted with the $R^1$ in an amount up to 3, and the six-membered ring fused with the cyclopentadienyl group to form the indenyl group can be substituted with a hydrocarbyl substituent of 1 to 8 carbon atoms in an amount up to 4. This again applies to the ligand $R^2{}_i$-Cp also.

$R^1$ and $R^2$ may or may not be bonded to each other at their ω position or their free terminus to form a crosslinked cyclopentadienyl ligand in which $R^1{}_h$-Cp and $R^2{}_i$-Cp are bonded together. k represents an integer of 0, 1 or 2, and j represents an integer of 1 or 2.

More particularly, the ligands $R^1{}_h$-Cp and $R^2{}_i$-Cp can be crosslinked to each other to form crosslinked cyclopentadienyl ligands. The crosslinking group, or bridge, is made of $-R^1-R^2-$, but it is to be understood that when $R^1$ and $R^2$ are bonded at their ω- or free terminus to form the bridge $-R^1-R^2-$ the shortest chain length is one atom, namely carbon or silicon, irrespective of the definition of the $R^1$ and $R^2$ given hereinabove, the preferable chain length of the bridge being one or two atoms.

Examples of the bridge thus include

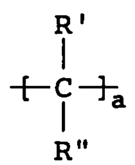 and 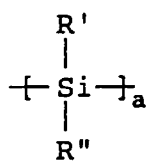

where R' and R" each indicate a hydrogen atom or a $C_{1-4}$ alkyl and a is 1 or 2, typical examples being methylene, $-CH_2-$, isopropylidene,

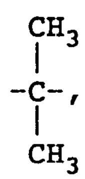

and ethylene, $-CH_2CH_2-$, and silylene, $-SiH_2-$, and dimethylsilylene,

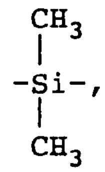

isopropylidene, ethylene and dimethylsilylene being preferred.

The ligands $R^1_h$-Cp and $R^2_i$-Cp, on the other hand and as described hereinabove, are, for example, cyclopentadienyl, indeneyl fluorenyl or tetrahydroindenyl, which may or may not be substituted with $R^1$ and/or $R^2$ which have not been used for forming the fused rings also for forming the bridge, and, when the ligands form crosslinked cyclopentadienyl ligands, the ligands $R^1_h$-Cp and $R^2_i$-Cp which may be the same or different in an amount preferably of 2, namely j = k = 1 or j + k = 2 in the general formula [I] given hereinabove, are crosslinked through a bridge $-R^1-R^2-$.

Particular examples of crosslinked cyclopentadienyl ligands thus include ethylenebis(cyclopentadiene), isopropylidenebis(cyclopentadiene) and dimethylsilylenebis(cyclopentadiene), which may or may not have the substituent $R^1$ and/or $R^2$ each in an amount up to 4, and ethylenebis(indene), isopropylidenebis(indene), dimethylsilylenebis(indene), ethylenebis(tetrahydroindene), isopropylidenebis(tetrahydroindene), and dimethylsilylenebis(tetrahydroindene), which may or may not have the substituent $R^1$ and/or $R^2$ on the 5-membered ring in the indenyl or tetrahydroindenyl group or a hydrocarbyl substituent of 1 to 8 carbon atoms on the 6-membered ring in the indenyl or tetrahydroindenyl group in an amount each up to 4.

M represents a transition metal selected from Ti, Zr, and Hf in the IVB group.

$Q^1$ and $Q^2$ independently represent a hydrogen atom, a hydrocarbyl group having 1-12 carbon atoms, a silicon-substituted hydrocarbyl group having a hydrocarbyl moiety of 1-12 carbon atoms, a halogen atom, a hydrocarbyloxy group having a hydrocarbyl moiety of 1-12 carbon atoms, or an amide group having a hydrocarbyl moiety of 1-12 carbon atoms. In this connection, $Q^1$ and $R^1_h$-Cp or $Q^2$ and $R^2_i$-Cp may or may not be bonded to each other.

More particularly, $Q^1$ which is bonded with the metal M can be bonded with the ligand $R^1_h$-Cp at ehe ω- or free terminus of $Q^1$ depending on the nature of $Q^1$, and when $Q^1$ is bonded with the ligand $R^1_h$-Cp, it is preferable that m is 1, j is 1, k is 0 and n is 2 in the general formula [I] and that $Q^1$ is bonded with the ligand $R^1_h$-Cp at the substituent $R^1$, where the substituent $R^1$ linking $Q^1$ and Cp is preferably a dimethylsilylene. Particular examples of $(R^1_h\text{-Cp})_j(R^2_i\text{-Cp})_kQ^1_m$ where $Q^1$ is bonded with $R^1_h$-Cp include dimethylsilylene(cyclopentadienyl)alkylamido and dimethylsilylene(indenyl)alkylamido. This applies to the combination of $R^2$ and $R^2_i$-Cp.

$Q^1$ and $Q^2$ may or may not be bonded to each other. m and n represent independently an integer of 0 to 3, and j+k+m+n = 4.

Preferable compounds of the general formula [I] are those of the formula where j + k is 2, m + n is 2 or j is 1, k is 0, m is 1 and n is 2. More preferable compounds are (A) those of the formula [I] where j + k is 2 and m + n is 2 and (i) where the $(R^1_h\text{-Cp})_j$ and the $(R^2_i\text{-Cp})_k$ are each indene or tetrahydroindene having 0 to 2 alkyl groups of 1 to 4 carbon atoms as a substituent and are crosslinked each other through an ethylene or dimethylsilylene group, or (ii) where the $(R^1_h\text{-Cp})_j$ is a cyclopentadiene and the $(R^2_i\text{-Cp})_k$ is 9-fluorene, or vice versa, having 0 to 5 alkyl groups of 1 to 4 carbon atoms as a substituent and are crosslinked each other through an isopropylidene group; and are (B) those of the formula [I] where j is 1, k is 0 and m is 1 and where $(R^1_h\text{-Cp})_j(R^2_i\text{-Cp})_kQ^1_m$ is dimethylsilylene(cyclopentadiene) $C_{1-12}$ alkylamido.

The non-limiting specific examples of the transition metal compounds of the IVB group include:

(1) Bicyclopentadienylzirconium dichloride,
(2) Biscyclopentadienylzirconium dimethyl,
(3) Biscyclopentadienylzirconium isobutyl,
(4) Biscyclopentadienylzirconium dihydride,
(5) Biscyclopentadienylzirconium chloride hydride,
(6) Biscyclopentadienylzirconium diphenyl,
(7) Biscyclopentadienylzirconium dimethoxide,
(8) Bis(methylcyclopentadienyl)zirconium dichloride,
(9) Bis(ethylcyclopentadienyl)zirconium dichloride,
(10) Bis(n-butylcyclopentadienyl)zirconium dichloride,
(11) Bis(t-butylcyclopentadienyl)zirconium dichloride,
(12) Bis(cyclohexylcyclopentadienyl) zirconium dichloride,
(13) Bis(trimethylsilylcyclopentadienyl)zirconium dichloride,

(14) Bis(phenylcyclopentadienyl)zirconium dichloride,
(15) Bis(dimethylcyclopentadienyl)zirconium dichloride,
(16) Bis(trimethylcyclopentadienyl)zirconium dichloride,
(17) Bis(tetramethylcyclopentadienyl)zirconium dichloride,
(18) Bis(indenyl)zirconium dichloride,
(19) (Cyclopentadienyl)(pentamethylcyclopentadienyl)zirconium dichloride,
(20) (Cyclopentadienyl)(methylcyclopentadienyl)zirconium dichloride,
(21) Methylenebis(indenyl)zirconium dichloride,
(22) Isopropylidenebis(indenyl)zirconium dichloride,
(23) Ethylenebis(indenyl)zirconium dichloride,
(24) Ethylenebis(4,5,6,7-tetrahydroindenyl)zirconium dichloride,
(25) Ethylenebis(2-methylindenyl)zirconium dichloride,
(26) Ethylenebis(3-methylindenyl)zirconium dichloride,
(27) Ethylenebis(4-methylindenyl)zirconium dichloride,
(28) Ethylenebis(2,3-dimethylindenyl)zirconium dichloride,
(29) Ethylenebis(2,4-dimethylindenyl)zirconium dichloride,
(30) Ethylenebis(4,7-dimethylindenyl)zirconium dichloride,
(31) Ethylenebis(2,4-dimethyl-4,5,6,7-tetrahydroindenyl)zirconium dichloride,
(32) Dimethylsilylenebis(indenyl)zirconium dichloride,
(33) Dimethylsilylenebis(4,5,6,7-tetrahydroindenyl)zirconium dichloride,
(34) Dimethylsilylenebis(2-methylindenyl)zirconium dichloride,
(35) Dimethylsilylenebis(3-methylindenyl)zirconium dichloride,
(36) Dimethylsilylenebis(2,4-dimethylindenyl)zirconium dichloride,
(37) Dimethylsilylenebis(2-methy1-4-isopropylindenyl)zirconium dichloride,
(38) Dimethylsilylenebis(2-methyl-4-tert-butylindenyl)zirconium dichloride,
(39) Dimethylsilylenebis(2-ethylindenyl)zirconium dichloride,
(40) Dimethylsilylenebis(tetramethylcyclopentadienyl)zirconium dichloride,
(41) Dimethylsilylenebis(2,4-dimethyl-4,5,6,7-tetrahydroindenyl)zirconium dichloride,
(42) Dimethylsilylenebis(methylcyclopentadienyl)zirconium dichloride,
(43) Dimethylsilylenebis(dimethylcyclopentadienyl)zirconium dichloride,
(44) Dimethylsilylenebis(t-butylcyclopentadienyl)zirconium dichloride,
(45) Dimethylsilylenebis(t-butylmethylcyclopentadienyl)zirconium dichloride,
(46) Dimethylsilylenebis(trimethylsilylcyclopentadienyl)zirconium dichloride,
(47) Diphenylsilylenebis(indenyl)zirconium dichloride,
(48) Diphenylsilylenebis(4,5,6,7-tetrahydroindenyl)zirconium dichloride,
(49) Isopropylidene(cyclopentadienyl)(tetramethylcyclopentadienyl)zirconium dichloride,
(50) Isopropylidene(cyclopentadienyl)(dimethylcyclopentadienyl)zirconium dichloride,
(51) Isopropylidene(cyclopentadienyl)(indenyl)zirconium dichloride,
(52) Isopropylidene(cyclopentadienyl)(9-fluorenyl)zirconium dichloride,
(53) Isopropylidene(methylcyclopentadienyl)(9-fluorenyl)zirconium dichloride,
(54) Diphenylmethylene(cyclopentadienyl)(9-fluorenyl)zirconium dichloride,
(55) Cyclohexylidene(cyclopentadienyl)(9-fluorenyl)zirconium dichloride,
(56) Dimethylsilylene(cyclopentadienyl)(9-fluorenyl)zirconium dichloride,
(57) Diphenylsilylene(cyclopentadienyl)(9-fluorenyl)zirconium dichloride,
(58) Cyclopentadienylzirconium trichloride,
(59) Pentamethylcyclopentadienylzirconium trichloride,
(60) Cyclopentadienylzirconium trimethyl,
(61) Cyclopentadienylzirconium tribenzyl,
(62) Cyclopentadienylzirconium triethoxide,
(63) Cyclopentadienylzirconium triphenoxide,
(64) Cyclopentadienylzirconium methyl dichloride,
(65) Cyclopentadienylzirconium tris(trimethylsilylmethyl),
(66) Cyclopentadienylzirconium tris(dimethylamide),
(67) Indenylzirconium trichloride,
(68) Methylene(tetramethylcyclopentadienyl)(t-butylamido)zirconium dichloride,
(69) Ethylene(tetramethylcyclopentadienyl)(t-butylamido)zirconium dichloride,
(70) Ethylene(tetramethylcyclopentadienyl)(methylamido)zirconium dichloride,
(71) Dimethylsilylene(tetramethylcyclopentadienyl)(t-butylamido)zirconium dichloride,

(72) Tetramethyldisilylene(tetramethylcyclopentadienyl)(t-butylamido)zirconium dichloride,
(73) Dimethylsilylene(tetramethylcyclopentadienyl)(phenylamido)zirconium dichloride,
(74) Dimethylsilylene(indenyl)(t-butylamido)zirconium dichloride,
(75) Dimethylsilylene(9-fluorenyl)(t-butylamido)zirconium dichloride, and
(76) titanium or hafnium compounds thereof.

Among these compounds, the compounds having cyclopentadienyl ligands crosslinked or bridged by a $C_{1-4}$ alkylene or lower ($C_{1-4}$) alkyl-substituted or non-substituted mono or oligosilylene are preferred. More preferable compounds are those having crosslinked through a bridge which is ethylene, isopropylidene or dimethylsilylene group. The compounds in which $Q^1$ or $Q^2$ represents independently Cl or methyl are preferred. More preferable are those where $Q^1$ or $Q^2$ is Cl.

<Component (B)>

Component (B) is an organoaluminum compound. The preferable compounds are represented by the following general formula:

$$R_qAlY_{3-q}$$

(wherein R represents hydrocarbyl group having 1-12 carbon atoms, Y represents halogen, oxygen, a hydride, an alkoxyl group having 1-12 carbon atoms, or an aryloxy group having 6-12 carbon atoms. q denotes a number defined as $0 < q \leqq 3$)

Specific examples of these compounds are a trialkylaluminum such as trimethylaluminum, triethylaluminum, triisopropylaluminum, triisobutylaluminum and tri-n-hexylaluminum; a trialkenylaluminum such as triisoprenylaluminum; an alkylaluminum halide such as diethylaluminum chloride and ethylaluminum sesquichloride, an alumoxane preferably a lower alkyl alumoxane, such as methylalumoxane, ethylalumoxane and isobutylalumoxane; an alkylaluminum hydride such as diethylaluminum hydride and diisobutylaluminum hydride; an alkylaluminum alkoxide such as diethylaluminum ethoxide, diethylaluminum butoxide and diisobutylaluminum ethoxide; and an alkylaluminum phenoxide such as diethylaluminum phenoxide and diisobutylaluminum phenoxide.

These organoaluminum compounds may be used alone or in combination thereof.

Among these compounds, the trialkylaluminum compounds, the halogenated aluminum compounds and the alumoxane compounds are preferred. More preferred are the trialkylaluminum compound having an alkyl group with 2 to 6 carbon atoms.

<Component (C)>

Component (C) is a magnesium halide compound in a liquid state, having no reducing activity. More particularly, the magnesium halide compound is liquid as it is or is liquefied, and the magnesium halide compound has no reducing activity when it is in a liquid state. When magnesium halide compound is in a liquid state by being liquefied, the magnesium halide compound may be one which has no reducing activity.

First of all, a magnesium halide compound having no reducing activity is a compound having no Mg-C bonding or Mg-H bonding and having at least one Mg-X bonding, wherein X represents a halogen atom. The magnesium compounds having no reducing activity may or may not be one derived from a magnesium compound having a reducing activity.

Examples of the magnesium compounds are magnesium dihalide such as magnesium chloride, magnesium bromide and magnesium iodide; an alkoxymagnesium halide such as methoxymagnesium chloride, ethoxymagnesium chloride, and butoxymagnesium chloride; and aryloxymagnesium halide such as phenoxymagnesium chloride and cresoxymagnesium chloride. These magnesium compounds can be in a form of a complex compound or a mixture with another metal compound.

Among these compounds, a magnesium dihalide, above all magnesium chloride, is preferred.

These magnesium compounds in the liquid state is obtained by combining the magnesium compound with an electron donor compound. As the electron donor compound which solubilizes a non-reducing magnesium compound, there can be mentioned, for example, (a) an alcohol (including an ether alcohol) having 1 to 18 carbon atoms such as methanol, ethanol, propanol, butanol, octanol, 2-ethylhexanol, decanol, cyclohexanol, benzyl alcohol, n-butyl cellosolve and ethylene glycol; (b) a mono- or dicarboxylic acid having 6 to 8 carbon atoms such as caprylic acid and 2-ethylhexanoic acid; (c) an aldehyde having 6 to 8 carbon atoms such as capryl aldehyde and 2-ethylhexyl aldehyde; (d) an ether having 2 to 12 carbon atoms such as epichlorohydrin and tetrahydrofuran; (e) an amine having 6 to 18 carbon atoms such as heptylamine and 2-ethylhexylamine; (f) a phosphate ester and a phosphite ester such as tributyl phosphate and tributyl phosphite; and (g) an inorganic acid ester such as tri-sec-butoxide and tetrabutyl titanate. These electron donor compounds may be used alone or in combination. The other electron donors can be used in order to increase the solubility.

Among these electron donor compounds, an alcohol and an ether are preferred. More preferred ones are monohydric alcohols having 4 to 12 carbon atoms.

On preparing a magnesium compound in a liquid state by combining a magnesium compound having no reducing activity with an electron donor, a hydrocarbon solvent can also be used. In such cases, an aliphatic hydrocarbon solvent such as pentane, hexane, heptane, octane, decane and n-paraffin, an alicyclic hydrocarbon solvent such as cyclohexane and methylcyclohexane, and an aromatic hydrocarbon solvent such as benzene, toluene, xylene and ethylbenzene can be used.

While the conditions for preparing manufacturing the magnesium compound in a liquid state depend on the types and amounts of solvents used, the types of the magnesium compounds and the types of the electron donor compounds, the solubilization of the magnesium compound is usually conducted by stirring preferably 0.5-20 mole, more preferably 1-6 mole of the electric donor compound per mole of the magnesium compound, and 0-500 cc, more preferably 1-100 cc of the solvent per g of the magnesium compound at a temperature in the range of 0°C to 300°C, preferably from room temperature to 180°C for about 30 minutes to about 2 hours.

Particularly preferred magnesium compounds for use as Component (C) are those prepared from magnesium dichloride as the magnesium compound and monohydric alcohol of 4 to 12 carbon atoms as the electron donor compound used in a proportion of 1 to 6 moles of the electron donor compound per mole of the magnesium compound thereby to liquefy the magnesium compound.

As for the proportions between catalyst Components (A)-(C), which are nonlimiting within the range where the effect of the present invention can be recognized, the atomic ratio of Al in the Component (B) to a transition metal M in the Component (A) (Al/M) has preferably a value in the range of 1-10000, preferably 1 to 5,000, more preferably 5 to 1,500, more preferably 5-500, and an atomic ratio of a magnesium component in component (C) to M in component (A) (Mg/M) has a value preferably in the range of 1-2000, more preferably 5-500, still more preferably 10 to 200. The molar ratio of (an organoaluminum component in the component (B)) to (an electron donor compound in the component (C)) is in the range of 1-200, more preferably 1.2-50, still more preferably 1.4 to 20.

While the catalyst Components (A)-(C) may be introduced directly into a polymerization reactor separately in any sequence, it is preferable to contact the Component (B) with the Component (C) with which the Component (A) is then contacted.

[Polymerization]

The monomer to be polymerized with the use of the catalyst of the present invention is an $\alpha$-olefin having 2-12 carbon atoms. Specific examples are ethylene, propylene, 1-butene, 1-pentene, 3-methylbutene-1, 1-hexene, 4-methylpentene-1, 1-octene, and 1-decene. These monomers can be polymerized alone or in combination of the two or more thereof. These monomers can also be combined with a diolefin and cycloolefin such as 1,4-pentadiene, 1,5-hexadiene, 7-methyl-1,7-octadiene, cyclopentene and cyclopentene.

The polymerization can be carried out by any one of the well-known processes in a liquid phase, a gaseous phase or a high-pressure homogeneous phase. These processes may be adopted alone or in series.

When the catalyst is used, an aromatic hydrocarbon solvent such as benzene, toluene or xylene, aliphatic hydrocarbon solvent such as n-pentane, n-hexane, n-heptane and n-paraffin, an alicyclic hydrocarbon solvent such as cyclohexane or methylcyclopentane, as well as a monomer itself such as propylene or 1-hexene can be applied.

The polymerization temperature is in the range of -20°C to 260°C, preferably 40 to 220°C, and the polymerization pressure is selected appropriately within the range from atmospheric pressure to 2,000 $kg/cm^2 \cdot G$. Polymerization time depends on the process adopted, although it is appropriately selected between 10 seconds to 12 hours.

A molecular weight modifier can be used for polymerization. Typically, a product having a lower molecular weight can be produced with the use of hydrogen gas.

EXAMPLES

[Example 1]

(1) Preparation of a magnesium compound in liquid state

Into a 200-ml glass flask which had been dried and thoroughly purged with $N_2$ was introduced 1.78 g of

anhydrous magnesium chloride. Next, 20 ml of n-decane and 6.1 ml of 2-ethylhexanol were introduced and stirred for 90 minutes at 120°C to give a homogeneous solution of magnesium chloride.

(2) Polymerization

To a 1-liter autoclave equipped with a stirring blade which had preliminarily been thoroughly dried and purged with ethylene was introduced 300 ml of purified toluene. The aforementioned magnesium chloride in the liquid state in a mixed solution of 2-ethyl hexanol/decane was next introduced in an amount of 1.0 mmole on the basis of a magnesium atom followed by triethylaluminum in an amount of 4.0 mmole. Next, 0.0055 mmole of ethylenebis(4,5,6,7-tetrahydroindenyl)zirconium dichloride was introduced, and ethylene was introduced to ensure that the ethylene pressure in the polymerization vessel was maintained at 5 $kg/cm^2\cdot G$ for conducting polymerization operations at 60°C for 2 hours.

Polyethylene, which had a number average molecular weight Mn of $0.260 \times 10^5$ and Mw a weight average molecular weight of $0.932 \times 10^5$ and a molecular weight distribution of Q (Mw/Mn) of 3.59, was obtained in a yield of 4.8 g.

[Comparative Example 1]

Example 1 was repeated except that a suspension in toluene of magnesium chloride, which had been preliminarily activated for 40 hours in a 1-liter ball mill with a ball having a diameter of 12.7 mm at an amplitude vibration of 5 mm and a motor speed of 2,000 rpm, was used in an amount of 1 mmole on the basis of a magnesium atom in place of the mixed solution of magnesium chloride in a 2-ethyl hexanol/decane in Example 1.

Table 1 shows the results.

[Comparative Example 2]

Example 1 was repeated except that 2-ethylhexanol was used in an amount of 2.0 mmole in place of the mixed solution of magnesium chloride in 2-ethyl hexanol/decane in Example 1.

However, polymers were not obtained.

[Example 2]

Example 1 was repeated except that triisobutylaluminum was used in an amount of 4.0 mmole in place of the triethylaluminum in Example 1.

Table 1 shows the results.

[Example 3]

Example 2 was repeated except that the polymerization solvent in Example 2 was replaced by heptane and ethylenebis(4,5,6,7-tetrahydroindenyl)zirconium chloride was used in an amount of 0.0274 mmole.

Table 1 shows the results.

[Example 4]

Example 1 was repeated except that ethylenebis(4,5,6,7-tetrahydroindenyl)zirconium dichloride in Example 1 was replaced by 0.0055 mmole of bis(pentamethylcyclopentadienyl)zirconium chloride.

Table 1 shows the results.

[Example 5]

(1) Preparation of the magnesium compound in liquid state

To a 200-ml glass flask which had preliminarily been fully dried and thoroughly purged with $N_2$ was introduced 1.23 g of anhydrous magnesium chloride. Then, 20 ml of n-decane and 4.7 ml of butanol were introduced and stirred at 80°C for 90 minutes to give a homogeneous solution.

(2) Polymerization

The polymerization operation in Example 4 was repeated except that the magnesium chloride in n-butanol/decane solution stated above was used in an amount of 1.0 mmole on the basis of a magnesium atom as the magnesium compound in the liquid state in Example 4 and triethylaluminium was used in an amount of 6.0 mmole.

Table 1 shows the results.

[Example 6]

To a 1-liter, pressure-resistant autoclave equipped with a stirring blade, which had preliminarily been thoroughly dried and purged with propylene, was introduced 10 ml of purified toluene. Next, a solution of magnesium chloride in 2-ethylhexanol/decane solution in an amount of 1.0 mmole on the basis of a magnesium atom, 4.0 mmole of triisobutyl aluminum and 0.0274 mmole of ethylenebis(4,5,6,7-tetrahydroindenyl)zirconium dichloride were introduced. Additionally, after 400 ml of liquefied propylene was introduced, the temperature was raised to 70°C, and polymerization operations were conducted for 2 hours. After polymerization was completed, monomers were removed and the product was dried under reduced pressure to give a polymer. As a result, polypropylene was obtained in a yield of 47.9 g. The product was isotactic polypropylene having [mm] of 0.86 based on the measurement of NMR.

Table 1 shows the results in detail.

[Example 7]

Polymerization operations in Example 6 were repeated except that isopropylidene(cyclopentadienyl)(9-fluorenyl)zirconium dichloride was used in an amount of 0.0274 mmole instead of the ethylenebis(4,5,6,7-tetrahydroindenyl)zirconium dichloride in Example 6, and that polymerization was conducted at 40°C.

As a result, polypropylene was obtained in a yield of 13.1 g. The product was found to be a syndiotactic polypropylene having the [rr] of 0.94 based on the measurement of NMR.

Table 1 shows the results in detail.

[Example 8]

The polymerization operations in Example 2 were repeated except that the ethylenebis(4,5,6,7-tetrahydroindenyl)zirconium dichloride in Example 2 was replaced by dimethylsilylene(tetramethylcyclopentadienyl)(t-butylamido)titanium dichloride synthesized in accordance with Example 2 in Japanese Patent Laid-Open Publication No. 163088/1991 in an amount of 0.0209 mmole.

Table 1 shows the results.

Table 1

| Experimental Example | Catalyst Components | | | Polymerization Conditions | | | Results of Polymerization | | |
|---|---|---|---|---|---|---|---|---|---|
| | Component (A) | Component (B) | Component (C) | Solvent | Monomer | | Amount of Polymer | $\times 10^5$ Molecular Weight (Mn) | Mw/Mn |
| Example 1 | $Et(THI)_2ZrCl_2$ | TEA | $MgCl_2$/2EHOH | Toluene | Ethylene | 60°C | 4.8 (g) | 0.260 | 3.59 |
| Comparative Example 1 | " | " | $MgCl_2$ | " | " | " | 0.6 | 0.189 | 5.78 |
| Comparative Example 2 | " | " | 2EHOH | " | " | " | 0 | - | - |
| Example 2 | " | TiBA | $MgCl_2$/2EHOH | " | " | " | 7.4 | 0.488 | 3.03 |
| Example 3 | " | " | " | Heptane | " | " | 8.9 | 0.285 | 2.81 |
| Example 4 | $Cp^*_2ZrCl_2$ | TEA | " | Toluene | " | " | 8.6 | 0.481 | 3.92 |
| Example 5 | " | " | $MgCl_2$/BuOH | " | " | " | 8.3 | 0.386 | 5.46 |
| Example 6 | $Et(THI)_2ZrCl_2$ | TiBA | $MgCl_2$/2EHOH | - | Propylene | 70°C | 47.9 | 0.198 | 2.26 |
| Example 7 | $Pr(Cp)(Fl)ZrCl_2$ | " | " | - | " | 40°C | 13.1 | 0.440 | 2.51 |
| Example 8 | $Me_2Si(Cp^+)(tBuN)TiCl_2$ | " | $MgCl_2$/2EHOH | Toluene | Ethylene | 60°C | 1.2 | 0.236 | 12.1 |

THI: Tetrahydroindenyl
2EHOH: 2-Ethylhexanol BuOH: Butanol
$Cp^*$: Pentamethylcyclopentadienyl Fl: 9-Fluorenyl
$Cp^+$: Tetramethylcyclopentadienyl

## Claims

1. A process for polymerizing olefins, which comprises contacting an α-olefin having 2-12 carbon atoms with a catalyst comprising the following catalyst components of (A), (B) and (C) thereby to polymerize the α-olefin:
Component (A), which is a transition metal compound in the IVB group of the Periodic Table having at least one cyclopentadienyl group, which may be substituted or non-substituted, as a ligand;
Component (B), which is an organoaluminum compound; and
Component (C), which is a magnesium halide compound in a liquid state having no reducing activity.

2. The process as claimed in claim 1, wherein the compound of Component (A) is indicated by a formula:
$$(R^1{}_h\text{-}Cp)_j(R^2{}_i\text{-}Cp)_kMQ^1{}_mQ^2{}_n$$
wherein:
Cp represents a cyclopentadienyl group;
$R^1$ and $R^2$ are substituent groups, which may be on a cyclopentadienyl group, and represent a hydrocarbyl group having 1-12 carbon atoms or a silicon group containing a hydrocarbyl group having 1-12 carbon atoms, wherein $R^1$ and $R^2$ may or may not be bonded to each other at their ω position or their free terminus to form a crosslinked cyclopentadienyl ligand in which $R^1{}_h$-Cp and $R^2{}_i$-Cp are bonded together;
h and i denote independently an integer of 0 to 5;
whereby, when $R^1$ or $R^2$ is present in plurality where h or i is 2 to 5, two of them may or may not be bonded at the ω position or at their free terminus to form a ring fused with cyclopentadienyl group;
k represents an integer of 0, 1 or 2, and j represents an integer of 1 or 2;
M represents a transition metal selected from Ti, Zr, and Hf in the IVB group;
$Q^1$ and $Q^2$ independently represent a hydrogen atom, a hydrocarbyl group having 1-12 carbon atoms, a silicon-substituted hydrocarbyl group having a hydrocarbyl moiety of 1-12 carbon atoms, a halogen atom, a hydrocarbyloxy group having a hydrocarbyl moiety of 1-12 carbon atoms, or an amide group having a hydrocarbyl moiety of 1-12 carbon atoms, wherein $Q^1$ and $R^1$-Cp may or may not be bonded to each other and $Q^1$ and $Q^2$ may or may not be bonded to each other;
m and n represent independently an integer of 0 to 3, provided that j, k, m and n are defined as $j+k+m+n = 4$.

3. The process as claimed in claim 2, wherein the groups $R^1{}_h$-Cp, and $R^2{}_i$-Cp are selected from a cyclopentadienyl group, fluorenyl group and indenyl group, which may or may not be substituted.

4. The process as claimed in claim 2 or 3, wherein the Component (A) is such that j+k is 2, m+n is 2 and the ligand $(R^1{}_h\text{-}Cp)_j$ and the ligand $(R^2{}_i\text{-}Cp)_k$ form crosslinked cyclopentadienyl ligands, the crosslinking being through a bridge $-R^1\text{-}R^2\text{-}$.

5. The process as claimed in claim 4, wherein the $(R^1{}_h\text{-}Cp)_j$ and the $(R^2{}_i\text{-}Cp)_k$ form a crosslinked cyclopentadienyl ligand where the bridge for crosslinking is selected from the group consisting of isopropylidene, ethylene and dimethylsilylene groups.

6. The process as claimed in claim 2 or 3, wherein the Component (A) is such that m is 1, j is 1, k is 0, n is 2 and $Q^1$ is bonded with the ligand $(R^1{}_h\text{-}Cp)$.

7. The process as claimed in claim 6, wherein $Q^1$ is bonded with the ligand $(R^1{}_h\text{-}Cp)$ through a bridge $-R^1\text{-}$ which is a dimethylsilylene group.

8. The process as claimed in any one of the preceding claims, wherein the organoaluminum compound of Component (B) has a formula:
$$R_qAlY_{3-q}$$
wherein R represents hydrocarbyl group having 1-12 carbon atoms;
Y represents halogen, oxygen, a hydride, an alkoxyl group having 1-12 carbon atoms, or an aryloxy group having 6-12 carbon atoms; and
q denotes a number defined as $0 < q \leqq 3$.

9. The process as claimed in claim 8, wherein the organoaluminum compound is selected from a group consisting of trialkylaluminums, trialkenylaluminums, alkylaluminum halides, alumoxanes, alkylaluminum hydrides, alkylaluminum alkoxides, and alkylaluminum phenoxides.

**10.** The process as claimed in claim 9, wherein the organoaluminum compound is a trialkylaluminum.

**11.** The process as claimed any one of the preceding claims, wherein the magnesium halide compound is selected from the group consisting of magnesium dihalides, alkoxymagnesium halides, and aryloxymagnesium halides.

**12.** The process as claimed in claim 11, wherein the magnesium halide compound is a magnesium dihalide.

**13.** The process as claimed in any one of the preceding claims, wherein the magnesium halide compound is solubilized by an electron donor compound selected from the group consisting of alcohols including ether alcohols having 1 to 8 carbon atoms, mono- or dicarboxylic acids having 6 to 8 carbon atoms, aldehydes having 6 to 8 carbon atoms, ethers having 2 to 12 carbon atoms, amines having 6 to 18 carbon atoms, phosphate esters, phosphite esters, inorganic acid esters.

**14.** The process as claimed in claim 13, wherein the electron donor compound is selected from the group consisting of alcohols and ethers.

**15.** The process as claimed in claim 13, wherein the electron donor is an alcohol having 4 to 12 carbon atoms.